# EUROPEAN PATENT APPLICATION

(11) **EP 4 564 967 A1**
(43) Date of publication of application: **04.06.2025**
(21) Application number: 23851904.5
(22) Date of filing: 10.08.2023
(51) Int. Cl.: H04W 72/04

(54) **UPLINK TRANSMISSION METHOD AND APPARATUS**

(30) Priority: 11.08.2022 CN 202210962707; 04.11.2022 CN 202211380677; 17.02.2023 CN 202310172099
(71) Applicant: Huawei Technologies Co., Ltd., Shenzhen, Guangdong 518129 (CN)
(72) Inventor: FAN, Ming, Shenzhen, Guangdong 518129 (CN); DING, Mengying, Shenzhen, Guangdong 518129 (CN); LONG, Yi, Shenzhen, Guangdong 518129 (CN); WANG, Xu, Shenzhen, Guangdong 518129 (CN); LUO, Qingquan, Shenzhen, Guangdong 518129 (CN)
(74) Representative: Gill Jennings & Every LLP
(86) International application number: PCT/CN2023/112105
(87) International publication number: WO 2024/032683

(57) **Abstract**

This application provides an uplink transmission method and apparatus, to improve uplink transmission reliability. The method includes: A network device sends configuration information of N bands to a terminal; the network device sends first information to the terminal, where the first information indicates to perform uplink transmission in a first time unit by using M first bands; the network device sends second information to the terminal, where the second information indicates to perform uplink transmission in a second time unit by using K second bands; and the network device sends third information to the terminal, where the third information indicates to perform uplink transmission in a third time unit by using L third bands, where when a quantity of bands in a union set of the M first bands, the K second bands, and the L third bands is greater than S, and the first threshold is greater than 0, a time interval between a start moment of the third time unit and a start moment of the second time unit is greater than or equal to the first threshold.

## Description

This application claims priorities to Patent Application No. 202210962707.5, filed on August 11, 2022, and entitled "UPLINK TRANSMISSION METHOD AND APPARATUS", to Patent Application No. 202211380677.3, filed on November 4, 2022, and entitled "UPLINK TRANSMISSION METHOD AND APPARATUS", and to Patent Application No. 202310172099.2, filed on February 17, 2023, and entitled "UPLINK TRANSMISSION METHOD AND APPARATUS", which are incorporated herein by reference in their entireties.

### TECHNICAL FIELD

This application relates to the communication field, and more specifically, to an uplink transmission method and apparatus.

### BACKGROUND

In uplink carrier aggregation of 3rd generation partnership project (3rd generation partnership project, 3GPP) release 17 (release 17, R17), a network device may configure two bands for a terminal. The two bands both support 2Tx transmission. Supporting 2Tx transmission means that transmission can be simultaneously performed on two radio frequency links in the band. The terminal may perform concurrent transmission in the two bands, or randomly switch between the two bands. Because radio frequency parameter information of different bands is different, the terminal can perform uplink transmission in a specific band only in the case that radio frequency parameter information of the corresponding band is stored in the terminal. In R17, before the terminal performs uplink transmission in two configured bands, radio frequency parameter information of the two bands is separately loaded to a radio frequency space in advance. Radio frequency parameter information of a specific band is directly read from the radio frequency space when the band is to be scheduled for transmission.

Each band supports 2Tx transmission. This may be understood as that each band supports transmission using a maximum of two antenna ports (ports). Therefore, if the radio frequency space of the terminal supports storing radio frequency parameter information of two bands in R17, the radio frequency space of the terminal supports simultaneous uplink transmission using a maximum of four antenna ports. If a specific band supports 2Tx transmission, when two ports are used for transmission in the band, radio frequency parameter information of the band needs to occupy two radio frequency spaces; or when one port is used for transmission in the band, radio frequency parameter information of the band may occupy two radio frequency spaces or one radio frequency space. If a specific band supports 1Tx transmission, when one port is used for transmission in the band, radio frequency parameter information of the band needs to occupy one radio frequency space.

Increase in a quantity of bands accordingly brings increase in radio frequency spaces that are needed. When the network device configures configuration information of N bands for the terminal, if the terminal performs uplink transmission by using the N bands, radio frequency parameter information of the N bands all needs to be loaded to the radio frequency space. However, a size of the radio frequency space of the terminal is limited, and the terminal may not support simultaneously using the N bands for uplink transmission, where N is an integer greater than or equal to 3.

### SUMMARY

This application provides an uplink transmission method and apparatus, to improve uplink transmission reliability.

According to a first aspect, an uplink transmission method is provided. The method may be performed by a terminal or a module/unit used in the terminal. The method includes: The terminal sends capability information to a network device, where the capability information indicates a first band combination and a first threshold corresponding to the first band combination, the first band combination includes R bands, and R is an integer greater than or equal to 2; the terminal receives configuration information of the first band combination from the network device; the terminal receives first information from the network device, where the first information indicates the terminal to perform uplink transmission in a first time unit by using M first bands, the M first bands are bands in the R bands, and M is a positive integer less than or equal to R; the terminal receives second information from the network device, where the second information indicates the terminal to perform uplink transmission in a second time unit by using K second bands, the K second bands are bands in the R bands, K is a positive integer less than or equal to R, the K second bands are partially or completely different from the M first bands, and the second time unit is later than the first time unit; and the terminal receives third information from the network device, where the third information indicates the terminal to perform uplink transmission in a third time unit by using L third bands, the L third bands are bands in the R bands, L is a positive integer less than or equal to R, the L third bands are partially or completely different from the K second bands, and the third time unit is later than the second time unit, where when a quantity of bands in a union set of the M first bands, the K second bands, and the L third bands is greater than S, and the first threshold is greater than 0, a time interval between a start moment of the third time unit and a start moment of the second time unit is greater than or equal to the first threshold, where S is an integer greater than or equal to 2.

Based on the foregoing technical solution, when the quantity of bands in the union set of the M first bands, the K second bands, and the L third bands is greater than S, a radio frequency space of the terminal probably cannot store radio frequency parameter information respectively corresponding to all the bands in the union set, and the terminal needs to delete radio frequency parameter information corresponding to all or some of the M first bands and the K second bands and load radio frequency parameter information of a third band that is in the L third bands and that is not in a union set of the M first bands and the K second bands. Therefore, the time interval between the start moment of the third time unit and the start moment of the second time unit is greater than or equal to the first threshold and/or a time interval between an end moment of a PDCCH that carries the third information and the start moment of the third time unit is greater than or equal to a second threshold. This can avoid that the terminal fails to load the radio frequency parameter information of the third band that is in the L third bands and that is not in the union set of the M first bands and the K second bands due to insufficiency of time needed by the terminal to load the radio frequency parameter information, thereby improving uplink transmission reliability.

In a possible implementation, the M first bands are bands used before first uplink switching, the K second bands are bands used after the first uplink switching and bands used before second uplink switching, and the L third bands are bands used after the second uplink switching.

In a possible implementation, the uplink transmission that is indicated by the second information and that is performed in the second time unit is uplink transmission after the first uplink switching, and the uplink transmission that is indicated by the third information and that is performed in the third time unit is uplink transmission after the second uplink switching.

In a possible implementation, the second time unit and the third time unit are within two consecutive slots.

According to a second aspect, an uplink transmission method is provided. The method may be performed by a network device or a module/unit used in the network device. The method includes: The network device receives capability information from a terminal, where the capability information indicates a first band combination and a first threshold corresponding to the first band combination, the first band combination includes R bands, and R is an integer greater than or equal to 2; the network device sends configuration information of the first band combination to the terminal; the network device sends first information to the terminal, where the first information indicates the terminal to perform uplink transmission in a first time unit by using M first bands, the M first bands are bands in the R bands, and M is a positive integer less than or equal to R; the network device sends second information to the terminal, where the second information indicates the terminal to perform uplink transmission in a second time unit by using K second bands, the K second bands are bands in the R bands, K is a positive integer less than or equal to R, the K second bands are partially or completely different from the M first bands, and the second time unit is later than the first time unit; and the network device sends third information to the terminal, where the third information indicates the terminal to perform uplink transmission in a third time unit by using L third bands, the L third bands are bands in the R bands, L is a positive integer less than or equal to R, the L third bands are partially or completely different from the K second bands, and the third time unit is later than the second time unit, where when a quantity of bands in a union set of the M first bands, the K second bands, and the L third bands is greater than S, and the first threshold is greater than 0, a time interval between a start moment of the third time unit and a start moment of the second time unit is greater than or equal to the first threshold, where S is an integer greater than or equal to 2.

The method provided in the second aspect is a network device side method corresponding to the first aspect. For beneficial effects thereof, refer to those of the first aspect.

In a possible implementation, the M first bands are bands used before first uplink switching, the K second bands are bands used after the first uplink switching and bands used before second uplink switching, and the L third bands are bands used after the second uplink switching.

In a possible implementation, the uplink transmission that is indicated by the second information and that is performed in the second time unit is uplink transmission after the first uplink switching, and the uplink transmission that is indicated by the third information and that is performed in the third time unit is uplink transmission after the second uplink switching.

In a possible implementation, the second time unit and the third time unit are within two consecutive slots.

According to a third aspect, a communication apparatus is provided. The apparatus may be used in the terminal according to the first aspect. The apparatus includes a transceiver unit, configured to implement receiving and sending functions of the method according to the first aspect.

According to a fourth aspect, a communication apparatus is provided. The apparatus may be used in the network device according to the second aspect. The apparatus includes a transceiver unit, configured to implement receiving and sending functions of the method according to the second aspect.

According to a fifth aspect, a communication apparatus is provided, including a processor and an interface circuit. The interface circuit is configured to receive a signal from another communication apparatus and transmit the signal to the processor, or send a signal from the processor to another communication apparatus. The processor implements the method according to any one of the first aspect, the second aspect, or the possible implementations of the first aspect and the second aspect by using a logic circuit or by executing code instructions.

According to a sixth aspect, a computer-readable storage medium is provided. The storage medium stores a computer program or instructions. When the computer program or the instructions is/are executed by a communication apparatus, the method according to any one of the first aspect, the second aspect, or the possible implementations of the first aspect and the second aspect is implemented.

According to a seventh aspect, a computer program product including instructions is provided. When the instructions are executed by a computer, a communication apparatus is enabled to implement the method according to any one of the first aspect, the second aspect, or the possible implementations of the first aspect and the second aspect.

The solutions provided in the third aspect to the seventh aspect are used to implement or collaboratively implement the methods provided in the first aspect and the second aspect, and therefore can achieve same or corresponding beneficial effects as those in the first aspect and the second aspect. Details are not described herein.

### BRIEF DESCRIPTION OF DRAWINGS

FIG. 1 is a diagram of an architecture of a communication system to which an embodiment of this application is applied;
FIG. 2 shows statistics of bandwidth distribution of contiguous FDD carriers in 1.4 GHz to 2.6 GHz and a quantity of FDD carriers owned by 63 operators;
FIG. 3 shows statistics of bandwidth distribution of contiguous FDD carriers in Sub-1 GHz and a quantity of FDD carriers owned by 63 operators;
FIG. 4 is a diagram of an aggregated bandwidth obtained through aggregation of a plurality of FDD carriers and a time division duplexing (time division duplexing, TDD) carrier bandwidth of a C-band in 1.4 GHz to 2.6 GHz;
FIG. 5 is a diagram of performing uplink switching between two bands in R17;
FIG. 6 is a diagram of a radio frequency space of a terminal in the case of more than two bands configured;
FIG. 7 is a diagram of performing two times of uplink switching by a terminal according to an embodiment of this application;
FIG. 8 is a schematic interaction flowchart of an uplink transmission method according to an embodiment of this application;
FIG. 9 is a schematic interaction flowchart of another uplink transmission method according to an embodiment of this application;
FIG. 10 is a block diagram of a communication apparatus according to an embodiment of this application; and
FIG. 11 is a block diagram of another communication apparatus according to an embodiment of this application.

### DESCRIPTION OF EMBODIMENTS

The following describes technical solutions of this application with reference to accompanying drawings.

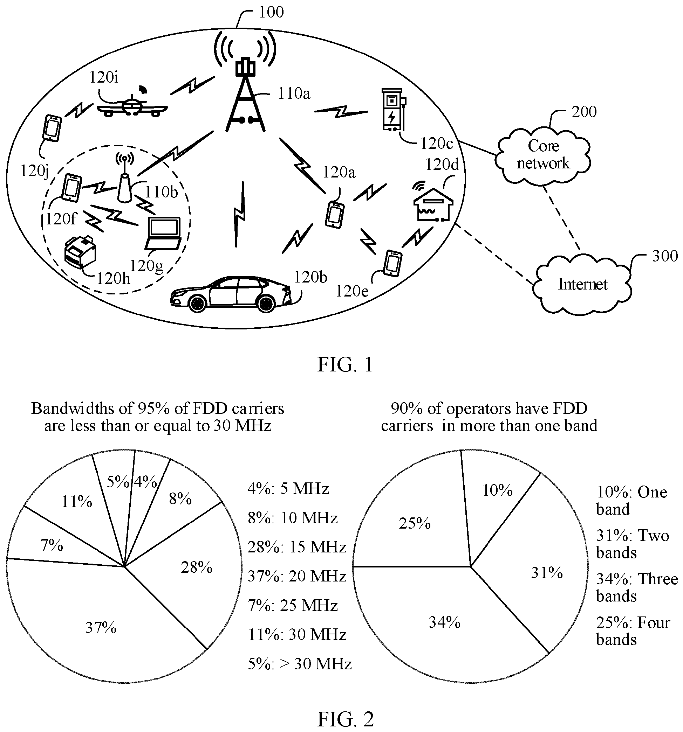

FIG. 1 is a diagram of an architecture of a communication system to which an embodiment of this application is applied. As shown in FIG. 1, the communication system includes a radio access network 100 and a core network 200. Optionally, the communication system may further include Internet 300. The radio access network 100 may include at least one radio access network device (for example, 110a and 110b in FIG. 1), and may further include at least one terminal (for example, 120a to 120j in FIG. 1). The terminal is connected to the radio access network device in a wireless manner, and the radio access network device is connected to the core network in a wireless or wired manner. A core network device and the radio access network device may be different independent physical devices, or functions of the core network device and logical functions of the radio access network device are integrated into a same physical device, or some functions of the core network device and some functions of the radio access network device are integrated into one physical device. A wired or wireless manner may be used for connection between terminals and between radio access network devices. FIG. 1 is merely a diagram. The communication system may further include other network devices, for example, a wireless relay device and a wireless backhaul device, which are not shown in FIG. 1.

The radio access network device is an access device via which the terminal accesses the communication system in a wireless manner. The radio access network device may be a base station (base station), an evolved NodeB (evolved NodeB, eNodeB), a transmission reception point (transmission reception point, TRP), a next generation NodeB (next generation NodeB, gNB) in a 5th generation (5th generation, 5G) mobile communication system, a next generation base station in a 6th generation (6th generation, 6G) mobile communication system, a base station in a future mobile communication system, an access node in a Wi-Fi system, or the like. Alternatively, the radio access network device may be a module or a unit that completes some functions of a base station, for example, may be a central unit (central unit, CU) or a distributed unit (distributed unit, DU). The CU herein completes functions of a radio resource control protocol layer and a packet data convergence protocol (packet data convergence protocol, PDCP) layer of the base station, and may further complete functions of a service data adaptation protocol (service data adaptation protocol, SDAP) layer. The DU completes functions of a radio link control layer and a medium access control (medium access control, MAC) layer of the base station, and may further complete some or all functions of a physical layer. For specific descriptions of the foregoing protocol layers, refer to related technical specifications in 3GPP. The radio access network device may be a macro base station (for example, 110a in FIG. 1), or may be a micro base station or an indoor base station (for example, 110b in FIG. 1), or may be a relay node or a donor node. A specific technology and a specific device form that are used by the radio access network device are not limited in embodiments of this application. For ease of description, the following provides descriptions by using an example in which the radio access network device is a base station.

A terminal is a device having a wireless transceiver function, and may send a signal to the base station or receive a signal from the base station. The terminal may alternatively be referred to as a terminal device, user equipment (user equipment, UE), a mobile station, a mobile terminal, or the like. The terminal may be widely used in various scenarios, for example, device-to-device (device-to-device, D2D), vehicle to everything (vehicle to everything, V2X) communication, machine-type communication (machine-type communication, MTC), internet of things (internet of things, IOT), virtual reality, augmented reality, industrial control, automatic driving, telemedicine, a smart grid, smart furniture, a smart office, smart wear, smart transportation, and a smart city. The terminal may be a mobile phone, a tablet computer, a computer with a wireless transceiver function, a wearable device, a vehicle, an airplane, a ship, a robot, a robotic arm, a smart home device, or the like. A specific technology and a specific device form that are used by the terminal are not limited in embodiments of this application.

The base station and the terminal may be at a fixed location or may be movable. The base station and the terminal may be deployed on land, including an indoor or outdoor scenario, a handheld device, or a vehicle-mounted device, or may be deployed on water, or may be deployed on an airplane, a balloon, or an artificial satellite. Application scenarios of the base station and the terminal are not limited in embodiments of this application.

Roles of the base station and the terminal may be relative. For example, a helicopter or an uncrewed aerial vehicle 120i in FIG. 1 may be configured as a mobile base station, and for a terminal 120j accessing the radio access network 100 through 120i, the terminal 120i is a base station. However, for the base station 110a, 120i is a terminal. In other words, communication between 110a and 120i is performed based on a radio air interface protocol. Certainly, communication between 110a and 120i may alternatively be performed based on an interface protocol between base stations. In this case, for 110a, 120i is also a base station. Therefore, both the base station and the terminal may be collectively referred to as communication apparatuses, 110a and 110b each in FIG. 1 may be referred to as a communication apparatus having a function of a base station, and 120a to 120j each in FIG. 1 may be referred to as a communication apparatus having a function of a terminal.

Communication between the base station and the terminal, between the base stations, or between the terminals may be performed over a licensed spectrum, or may be performed over an unlicensed spectrum, or may be performed over both the licensed spectrum and the unlicensed spectrum. Communication may be performed over a spectrum below 6 gigahertz (gigahertz, GHz), or may be performed over a spectrum above 6 GHz, or may be performed over both the spectrum below 6 GHz and the spectrum above 6 GHz. A spectrum resource used for wireless communication is not limited in embodiments of this application. Wireless communication may be performed between the base station and the terminal by using an air interface resource. The air interface resource may include at least one of a time domain resource, a frequency domain resource, a code resource, and a space resource.

In embodiments of this application, a function of the base station may alternatively be performed by a module (for example, a chip) in the base station, or may be performed by a control subsystem having a base station function. The control subsystem having the base station function herein may be a control center in the foregoing application scenarios, such as a smart grid, industrial control, smart transportation, and a smart city. A function of the terminal may be performed by a module (for example, a chip or a modem) in the terminal, or may be performed by an apparatus including a terminal function.

In this application, the base station sends a downlink signal or downlink information to the terminal, where the downlink information is carried on a downlink channel, and a process in which the base station sends the downlink information to the terminal may be referred to as downlink transmission; and the terminal sends an uplink signal or uplink information to the base station, where the uplink information is carried on an uplink channel, and a process in which the terminal sends the uplink information to the base station may be referred to as uplink transmission. To communicate with the base station, the terminal needs to establish a wireless connection to a cell controlled by the base station. The cell that establishes the wireless connection to the terminal is referred to as a serving cell of the terminal. When communicating with the serving cell, the terminal is further interfered by a signal from a neighboring cell.

It may be understood that, in embodiments of this application, a physical downlink control channel (physical downlink control channel, PDCCH) and a physical uplink shared channel (physical uplink shared channel, PUSCH) are merely examples of a downlink control channel and an uplink data channel respectively. In different systems and different scenarios, the data channel and the control channel may have different names. This is not limited in embodiments of this application.

To facilitate understanding of embodiments of this application, the following briefly describes technical solutions related to embodiments of this application.

In a mobile communication system, a bandwidth determines a maximum transmission rate of the communication system. Spectrums available to a current mobile communication system are limited and discontinuous, and in particular, frequency division duplexing (frequency division duplexing, FDD) carriers have pronounced discontinuous distribution on spectrums. FIG. 2 shows statistics of bandwidth distribution of contiguous FDD carriers in 1.4 GHz to 2.6 GHz and a quantity of FDD carriers owned by 63 operators. It can be found from FIG. 2 that, in 1.4 GHz to 2.6 GHz, bandwidths of 95% of FDD carriers are less than or equal to 30 MHz, and 90% of operators have FDD carriers in more than one band.

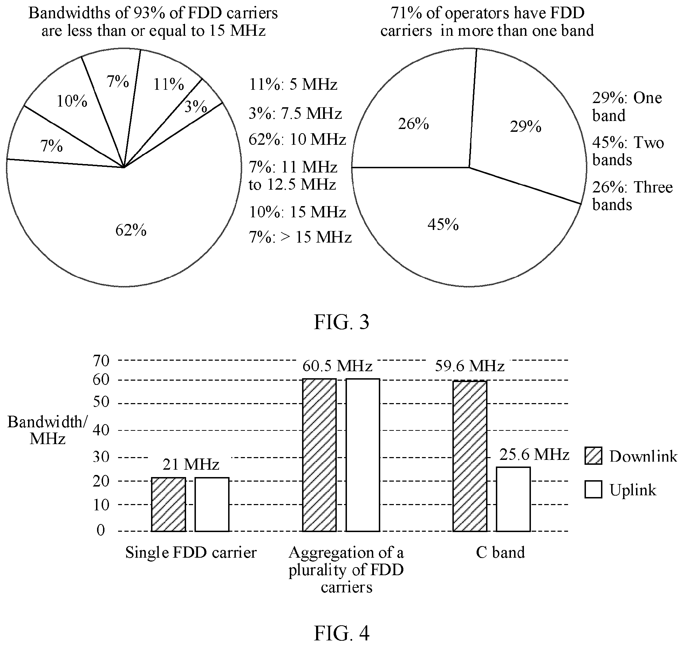

FIG. 3 shows statistics of bandwidth distribution of contiguous FDD carriers in Sub-1 GHz (Sub-1 GHz) and a quantity of FDD carriers owned by 63 operators. Sub-1 GHz refers to a band that operates in an industrial scientific medical (industrial scientific medical, ISM) band and whose frequency is below 1 GHz. The ISM band refers to several bands reserved by a wireless communication department of the International Telecommunication Union for industrial, scientific, and medical applications. It can be found from FIG. 3 that, in the band of Sub-1 GHz, bandwidths of 93% of FDD carriers are less than or equal to 15 MHz, and 71% of operators have FDD carriers in more than one band. The FDD carriers owned by the operators are characterized by a small bandwidth and a large quantity. Accordingly, emergence of research arises on aggregating spectrum resources of a plurality of carriers to form a larger aggregated bandwidth, to ensure a capability of implementing an ultra-broadband system in a 5G enhanced version.

FIG. 4 is a diagram of an aggregated bandwidth obtained through aggregation of a plurality of FDD carriers and a TDD carrier bandwidth of a C-band in 1.4 GHz to 2.6 GHz. It can be learned from the comparison that, the bandwidth obtained through the aggregation of the plurality of FDD carriers is approximately three times higher than that of a single FDD carrier, and the aggregated bandwidth of the plurality of FDD carriers has a downlink bandwidth basically consistent with that of the TDD carrier in the C-band (C-band) and an uplink bandwidth 2.4 times that of the TDD carrier. Therefore, it can be found that spectrum resource aggregation of the plurality of carriers has a great advantage.

In embodiments of this application, one band may be understood as one frequency band. The band may be a frequency range, and one band may include one or more carriers. For example, one band may be one frequency band obtained through division in a 3GPP protocol, for example, n1, n2, n41, or n78. n1, n2, n41, n78, and the like may be understood as identifiers of frequency bands. Each of the frequency bands corresponds to a preset frequency range. For example, a frequency range of a frequency band identified by n41 includes 2496 MHz to 2690 MHz, and an uplink frequency range is used as an example herein. For a specific definition of the band, refer to the 3GPP technical specification (technical specification, TS) 38.101-1 V17.6.0.

In uplink carrier aggregation in 3GPP R17, a network device may configure two bands for one terminal. The two bands both support 2Tx transmission. Supporting the 2Tx transmission means that transmission can be simultaneously performed on two radio frequency links in the band. The terminal may perform concurrent transmission in the two bands, or may randomly switch between the two bands. Because radio frequency parameter information of different bands is different, the terminal can perform uplink transmission in a specific band only in the case that radio frequency parameter information of the corresponding band is stored in the terminal. In R17, before the terminal performs uplink transmission in two configured bands, radio frequency parameter information of the two bands is separately loaded to a radio frequency space in advance. Radio frequency parameter information of a specific band is directly read from the radio frequency space when transmission is to be performed in the band. Therefore, in R17, a time interval between two times of uplink switching is not limited.

The time interval between the two times of uplink switching may be understood as a difference between a time unit in which uplink transmission starts after first uplink switching and a time unit in which uplink transmission starts after second uplink switching.

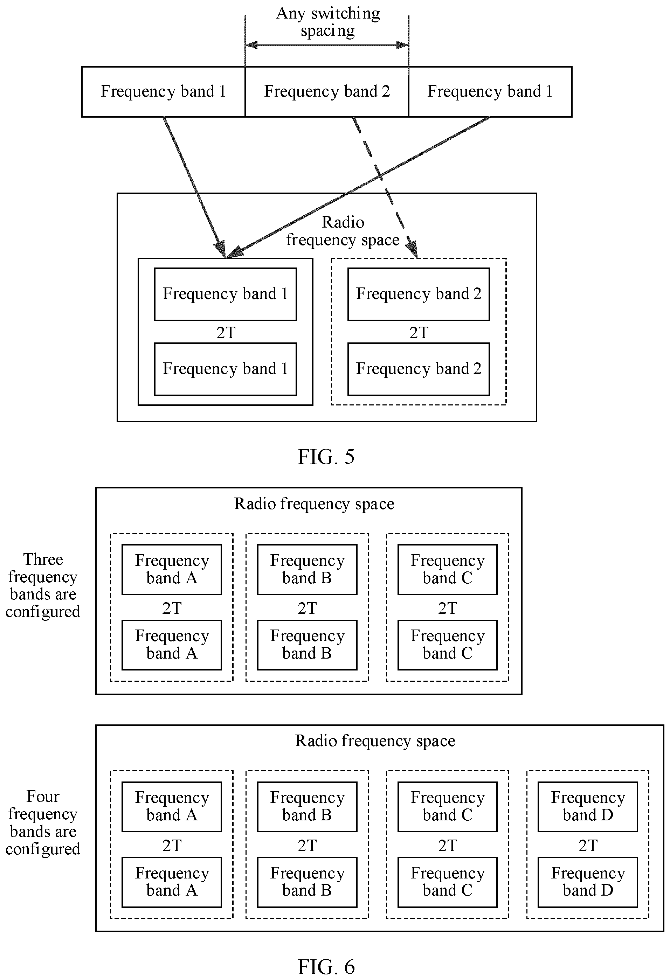

FIG. 5 is a diagram of performing uplink switching between two bands in R17. A band 1 and a band 2 are two bands allocated by a base station to a terminal. The terminal loads radio frequency parameter information of the band 1 and radio frequency parameter information of the band 2 to a radio frequency space in advance. When switching from the band 1 to the band 2, the terminal directly reads the radio frequency parameter information of the band 2 from the radio frequency space. Similarly, when switching from the band 2 to the band 1, the terminal directly reads the radio frequency parameter information of the band 1 from the radio frequency space.

Each band supports 2Tx transmission. This may be understood as that each band supports transmission using a maximum of two ports. Therefore, if the radio frequency space of the terminal supports storing the radio frequency parameter information of the two bands in R17, the radio frequency space of the terminal supports simultaneous uplink transmission using a maximum of four antenna ports. If a specific band supports 2Tx transmission, when two ports are used for transmission in the band, radio frequency parameter information of the band needs to occupy two radio frequency spaces; or when one port is used for transmission in the band, radio frequency parameter information of the band may occupy two radio frequency spaces or one radio frequency space. If a specific band supports 1Tx transmission, when one port is used for transmission in the band, radio frequency parameter information of the band needs to occupy one radio frequency space. In embodiments of this application, a quantity of radio frequency spaces may be determined based on a quantity of antenna ports supported by the band.

Increase in a quantity of bands accordingly brings increase in radio frequency spaces that are needed. FIG. 6 is a diagram of a radio frequency space of a terminal in the case of more than two bands configured. It is assumed that each of the bands uses two ports for transmission. When three bands are configured, the terminal needs six radio frequency spaces, where the three bands include a band A, a band B, and a band C. When four bands are configured, the terminal needs eight radio frequency spaces, where the four bands include a band A, a band B, a band C, and a band D. An increase in radio frequency spaces means that costs and implementation complexity of the terminal increases accordingly.

When the network device configures configuration information of N bands for the terminal, if the terminal performs uplink transmission by using the N bands, radio frequency parameter information of the N bands all needs to be loaded to the radio frequency space. However, a size of the radio frequency space of the terminal is limited, and the terminal may not support simultaneously using the N bands for uplink transmission, where N is an integer greater than or equal to 3.

Therefore, embodiments of this application provide an uplink transmission method, to resolve an uplink transmission problem of a terminal in the case that a radio frequency space of the terminal does not meet a requirement of simultaneously performing uplink transmission by using a plurality of bands, and improve uplink transmission reliability. The network device in embodiments of this application may be a base station. Uplink transmission indicated by first information, second information, and third information in embodiments of this application may be PUSCH uplink transmission, SRS uplink transmission, or PUCCH uplink transmission. This is not limited in embodiments of this application.

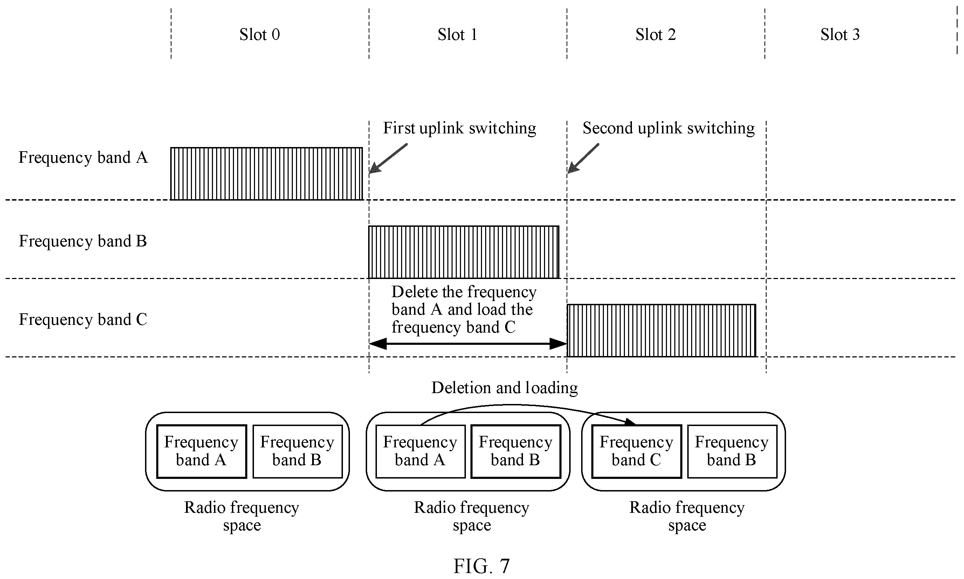

The time unit in embodiments of this application may be slot, sub-slot, symbol, subframe, or the like. For ease of understanding, the following describes the uplink transmission method provided in embodiments of this application with reference to a specific example. FIG. 7 is a diagram of performing two times of uplink switching by a terminal according to an embodiment of this application. For example, the terminal supports uplink transmission by simultaneously using a maximum of two bands. A network device sends band configuration information of three bands to the terminal: a band A, a band B, and a band C. The terminal loads radio frequency parameter information of the band A and the band B to a radio frequency space in advance. In this example, the time unit is a slot.

The network device sends first DCI to the terminal, where the first DCI indicates the terminal to perform uplink transmission in a slot 0 by using the band A. The terminal receives the first DCI and performs uplink transmission in the slot 0 by using the band A. The network device sends second DCI to the terminal, where the second DCI indicates the terminal to perform uplink transmission in a slot 1 by using the band B. The terminal receives the second DCI and performs uplink transmission in the slot 1 by using the band B. That the terminal switches from the band A to the band B to perform uplink transmission may be understood as that the terminal performs first uplink switching.

When the network device prepares to schedule the terminal to perform uplink transmission by using the band C, the network device determines that a quantity of bands in the band A, the band B, and the band C is greater than 2. In this case, the network device determines a time unit in which the terminal is to perform uplink transmission by using the band C. A time interval between a start moment of a time unit in which uplink transmission is performed by using the band B and a start moment of the time unit in which uplink transmission is performed by using the band C needs to be greater than or equal to a first threshold, so that the terminal has sufficient time to load radio frequency parameter information of the band C to the radio frequency space. The time unit that is determined by the network device and in which the terminal performs uplink transmission by using the band C is a slot 2, and the time unit that is determined by the network device and in which the terminal performs uplink transmission by using the band B is the slot 1. The network device sends third DCI to the terminal, where the third DCI indicates the terminal to perform uplink transmission in the slot 2 by using the band C. A time interval between a start moment of the slot 1 and a start moment of the slot 2 is greater than or equal to the first threshold and/or a time interval between an end moment of a PDCCH that carries the third DCI and the start moment of the slot 2 is greater than or equal to a second threshold, so that the terminal has sufficient time to load the radio frequency parameter information of the band C to the radio frequency space, where the second threshold is greater than the first threshold. The terminal receives the third DCI from the network device. The terminal deletes the radio frequency parameter information of the band A in the radio frequency space, and loads the radio frequency parameter information of the band C to the radio frequency space. The terminal starts uplink transmission by using the band C at the start moment of the slot 2. It may be understood that, that the terminal performs uplink transmission from the start moment of the slot 2 is merely an example. This is not limited in this application.

That the terminal switches from the band B to the band C for uplink transmission may be understood as that the terminal performs second uplink switching. The band A may be considered as a band used before the first uplink switching. The band B may be considered as a band used after the first uplink switching and a band used before the second uplink switching. The band C may be considered as a band used after the second uplink switching.

In this example, the third DCI is sent by the network device to the terminal in the slot 0. Therefore, a time interval between the end moment of the PDCCH that carries the third DCI and the start moment of the time unit in which uplink transmission is performed by using the band C is usually greater than or equal to the second threshold. However, the following further needs to be limited: The time interval between the start moment of the time unit in which uplink transmission is performed by using the band B and the start moment of the time unit in which uplink transmission is performed by using the band C is greater than or equal to the first threshold, and the time interval between the start moment of the time unit in which uplink transmission is performed by using the band B and the start moment of the time unit in which uplink transmission is performed by using the band C is greater than or equal to time needed by the terminal to load the radio frequency parameter information of the band C to the radio frequency space.

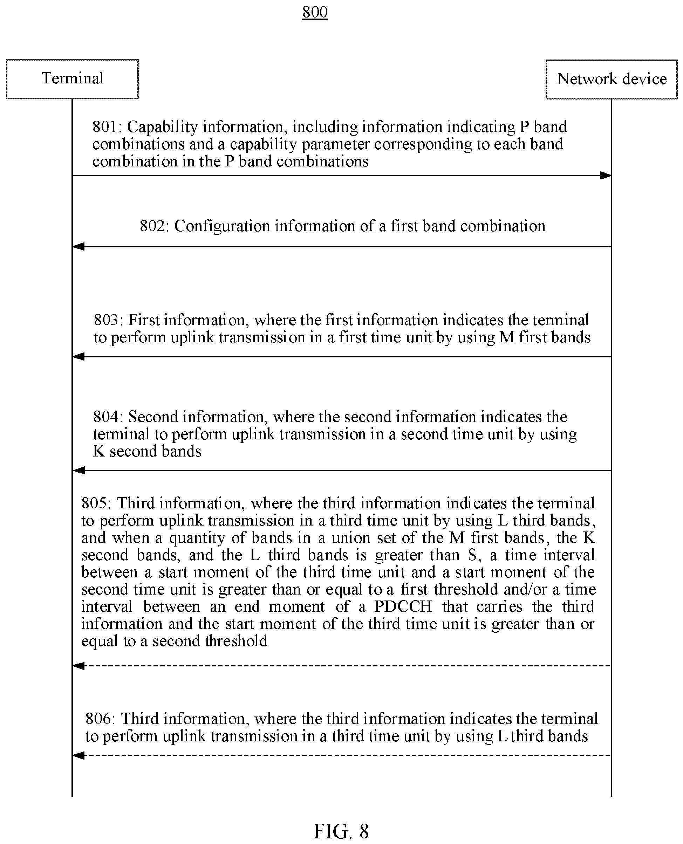

FIG. 8 is a schematic interaction flowchart of an uplink transmission method 800 according to an embodiment of this application.

801: A terminal sends capability information to a network device, where the capability information includes information indicating P band combinations and a capability parameter corresponding to each band combination in the P band combinations, the capability parameter corresponding to each band combination indicates whether scheduling time needs to be limited when a band in the band combination is scheduled to perform uplink transmission, where P is a positive integer. Correspondingly, the network device receives the capability information from the terminal. Each band combination includes at least two bands.

In another possible design, the capability parameter indicates that scheduling time needs to be limited when a band in the band combination is scheduled to perform uplink transmission. In other words, when the capability parameter exists, it indicates that the scheduling time needs to be limited; or when the capability parameter does not exist, it indicates that the scheduling time does not need to be limited.

For example, a field is added in a "BandCombination" information element, where the added field indicates the capability parameter. If a value of a capability parameter corresponding to a first band combination is "enable", scheduling time needs to be limited when a band in the first band combination is scheduled to perform uplink transmission. If a capability parameter corresponding to a first band combination is default (to be specific, when the capability information does not include the capability parameter), scheduling time does not need to be limited when a band in the first band combination is scheduled to perform uplink transmission.

Optionally, the capability information further indicates at least one of a band threshold S, a first threshold, and a second threshold, where S is an integer greater than or equal to 2. Optionally, the band threshold S, the first threshold, and the second threshold may alternatively be predefined. This is not limited in this embodiment of this application.

For another example, the first threshold is reported by the terminal to the network device by using the capability information, each band combination corresponds to one first threshold, and a capability parameter corresponding to each band combination may be implicitly included in the corresponding first threshold. If a first threshold corresponding to the first band combination is greater than "0", the scheduling time needs to be limited when the band in the first band combination is scheduled to perform uplink transmission. If a first threshold corresponding to the first band combination is "0", the scheduling time does not need to be limited when the band in the first band combination is scheduled to perform uplink transmission.

802: The network device sends configuration information of the first band combination to the terminal, where the first band combination is one of the P band combinations. The configuration information of the first band combination includes radio frequency parameter information of R bands in the first band combination, where R is an integer greater than or equal to 2. Correspondingly, the terminal receives the configuration information of the first band combination from the network device.

If the capability parameter corresponding to the first band combination indicates that the scheduling time needs to be limited when the band in the first band combination is scheduled to perform uplink transmission, the following step 803, step 804, and step 805 are performed. If the capability parameter corresponding to the first band combination indicates that the scheduling time does not need to be limited when the band in the first band combination is scheduled to perform uplink transmission, or the capability information does not include the capability parameter corresponding to the first band combination, the following step 803, step 804, and step 806 are performed.

803: The network device sends first information to the terminal, where the first information indicates the terminal to perform uplink transmission in a first time unit by using M first bands, the M first bands are bands in the R bands, and M is a positive integer less than or equal to R. The first information may be DCI. Correspondingly, the terminal receives the first information from the network device.

804: The network device sends second information to the terminal, where the second information indicates the terminal to perform uplink transmission in a second time unit by using K second bands, the K second bands are bands in the R bands, and K is a positive integer less than or equal to R. The second time unit is later than the first time unit. The second information may be DCI. The M first bands indicated by the first information may be partially or completely different from the K second bands indicated by the second information. Correspondingly, the terminal receives the second information from the network device.

805: The network device sends third information to the terminal, where the third information indicates the terminal to perform uplink transmission in a third time unit by using L third bands, the L third bands are bands in the R bands, L is a positive integer less than or equal to R, and the third time unit is later than the second time unit. When a quantity of bands in a union set of the M first bands, the K second bands, and the L third bands is greater than S, a time interval between a start moment of the third time unit and a start moment of the second time unit is greater than or equal to the first threshold and/or a time interval between an end moment of a PDCCH that carries the third information and the start moment of the third time unit is greater than or equal to the second threshold. The second threshold herein may be greater than the first threshold. The third information may be DCI. Correspondingly, the terminal receives the third information from the network device.

The K second bands indicated by the second information may be partially or completely different from the L third bands indicated by the third information.

When the quantity of bands in the union set of the M first bands, the K second bands, and the L third bands is greater than S, a radio frequency space of the terminal probably cannot simultaneously store radio frequency parameter information respectively corresponding to the bands in the union set, and the terminal needs to delete radio frequency parameter information corresponding to all or some of the M first bands and the K second bands and load radio frequency parameter information of a third band that is in the L third bands and that is not in a union set of the M first bands and the K second bands. Therefore, the time interval between the start moment of the third time unit and the start moment of the second time unit is greater than or equal to the first threshold and/or the time interval between the end moment of the PDCCH that carries the third information and the start moment of the third time unit is greater than or equal to the second threshold. This can avoid that the terminal fails to load the radio frequency parameter information of the third band that is in the L third bands and that is not in the union set of the M first bands and the K second bands due to insufficiency of time needed by the terminal to load the radio frequency parameter information, thereby improving uplink transmission reliability.

When the quantity of bands in the union set of the M first bands, the K second bands, and the L third bands is less than or equal to S, a radio frequency space of the terminal may store radio frequency parameter information respectively corresponding to the bands in the union set. Therefore, the time interval between the start moment of the third time unit and the start moment of the second time unit does not need to be limited, and the time interval between the end moment of the PDCCH that carries the third information and the start moment of the third time unit does not need to be limited.

Optionally, regardless of the quantity of bands in the union set of the M first bands, the K second bands, and the L third bands, the time interval between the start moment of the third time unit and the start moment of the second time unit is greater than or equal to the first threshold and/or the time interval between the end moment of the PDCCH that carries the third information and the start moment of the third time unit is greater than or equal to the second threshold.

806: The network device sends third information to the terminal, where the third information indicates the terminal to perform uplink transmission in a third time unit by using L third bands, the L third bands are bands in the R bands, L is a positive integer less than R, and the third time unit is later than the second time unit. The third information may be DCI. Correspondingly, the terminal receives the third information from the network device.

Optionally, the first information, the second information, and the third information may be information respectively sent by the network device when the network device schedules, for three consecutive times, the terminal to perform uplink transmission. For example, the network device schedules, for a first time by using the first information, the terminal to perform uplink transmission, the network device schedules, for a second time by using the second information, the terminal to perform uplink transmission, and the network device schedules, for a third time by using the third information, the terminal to perform uplink transmission.

Optionally, the first information, the second information, and the third information may not be information sent when the network device schedules, for three consecutive times, the terminal to perform uplink transmission. For example, the network device schedules, for a first time by using the first information, the terminal to perform uplink transmission in the first time unit by using the M first bands, the network device schedules, for a second time by using the second information, the terminal to perform uplink transmission by using the K second bands, the network device schedules, for a third time, the terminal to perform uplink transmission by using the K second bands, the network device schedules, for a fourth time, the terminal to perform uplink transmission in the second time unit by using the K second bands, and the network device schedules, for a fifth time by using the third information, the terminal to perform uplink transmission in the third time unit by using the L third bands. For another example, the network device schedules, for a first time by using the first information, the terminal to perform uplink transmission in the first time unit by using the M first bands, the network device schedules, for a second time, the terminal to perform uplink transmission in the M first bands, the network device schedules, for a third time by using the second information, the terminal to perform uplink transmission in the second time unit by using K second bands, and the network device schedules, for a fourth time by using the third information, the terminal to perform uplink transmission in the third time unit by using the L third bands.

Because the M first bands indicated by the first information are partially or completely different from the K second bands indicated by the second information, and the K second bands indicated by the second information are partially or completely different from the L third bands indicated by the third information, that the terminal performs uplink transmission based on the second information may be considered as first uplink switching, and that the terminal performs uplink transmission based on the third information may be considered as second uplink switching. The M first bands may be considered as bands used before the first uplink switching, the K second bands may be considered as bands used after the first uplink switching and bands used before the second uplink switching, and the L third bands may be considered as bands used after the second uplink switching.

The first time unit, the second time unit, and the third time unit are three consecutive time units, or the first time unit, the second time unit, and the third time unit are not three consecutive time units. For example, the second time unit and the third time unit are within two consecutive slots. In this case, the first uplink switching and the second uplink switching are completed in the two consecutive slots.

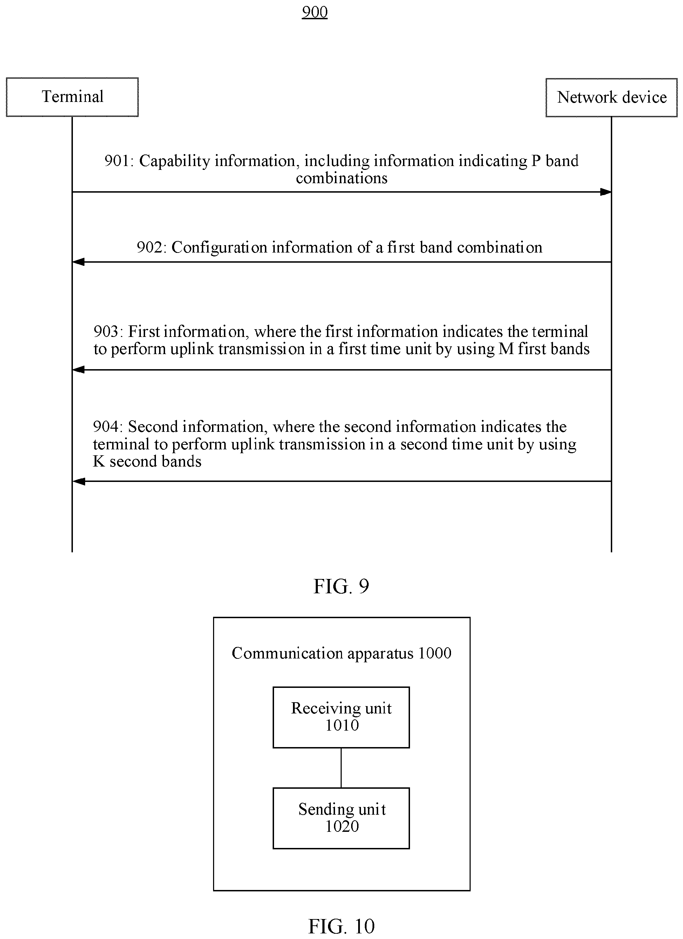

FIG. 9 is a schematic interaction flowchart of another uplink transmission method 900 according to an embodiment of this application.

901: A terminal sends capability information to a network device, where the capability information includes information indicating P band combinations, and P is a positive integer. Correspondingly, the network device receives the capability information from the terminal. Each band combination includes at least two bands.

902: The network device sends configuration information of the first band combination to the terminal, where the first band combination is one of the P band combinations. The configuration information of the first band combination includes radio frequency parameter information of R bands, where R is an integer greater than or equal to 2. Correspondingly, the terminal receives the configuration information of the first band combination from the network device.

903: The network device sends first information to the terminal, where the first information indicates the terminal to perform uplink transmission in a first time unit by using M first bands, the M first bands are bands in the R bands, and M is a positive integer less than or equal to R. The first information may be DCI. Correspondingly, the terminal receives the first information from the network device.

904: The network device sends second information to the terminal, where the second information indicates the terminal to perform uplink transmission in a second time unit by using K second bands, the K second bands are bands in the R bands, and K is a positive integer less than or equal to R. The second time unit is later than the first time unit. The second information may be DCI. The M first bands indicated by the first information may be partially or completely different from the K second bands indicated by the second information. Correspondingly, the terminal receives the second information from the network device.

Optionally, in X slots or Y µs of time after the end moment of the second time unit, or in a slot in which the second time unit is located, the network device schedules the terminal to perform uplink switching for a quantity of times not more than one time.

X and Y may be predefined, or may be indicated by the terminal to the network device by using the capability information. A subcarrier spacing *u_{UL}* corresponding to the X slots or a subcarrier spacing *u_{UL}* corresponding to the slot in which the second time unit is located may be determined by using any one of the following methods, where X is a positive integer greater than or equal to 1:
(1) the subcarrier spacing *u_{UL}* is a largest value of subcarrier spacings corresponding to active bandwidth parts (bandwidth parts, BWPs) of all bands in the first band combination, and *u_{UL}*=max{*u*₁,*u*₂,L ,*u_{I}*}, where *uᵢ* is a subcarrier spacing corresponding to an active BWP of an *i*^{th} band in the first band combination;
(2) the subcarrier spacing *u_{UL}* is a smallest value of subcarrier spacings corresponding to active BWPs of all bands in the first band combination, and *u_{UL}=*min{*u*₁,*u*₂,L *,u_{I}*}*;*
(3) *u_{UL}=*min{*u*_{*UL,*1}*u*_{*UL,*2}}, where *u*_{*UL*,1} is a largest value or a smallest value of subcarrier spacings corresponding to active BWPs of the M first bands, and *u*_{*UL*,2} is a largest value or a smallest value of subcarrier spacings corresponding to active BWPs of the K second bands;
(4) *u_{UL}*=max{*u*_{*UL*,1},*u*_{*UL*,2}} ; or
(5) the capability information sent by the terminal to the network device further indicates *u_{UL}.*

A larger subcarrier spacing indicates shorter time of a slot. Therefore, when a largest value of subcarrier spacings of all bands is obtained, a constraint on the scheduling time may be relaxed when infrequent switching is met, so that there are more opportunities for scheduling uplink transmission in a period of time, and a load balancing gain is greater. Advantages of the method (1) are as follows: The subcarrier spacings in the first band combination are usually 15 kHz or 30 kHz, a value of *u_{UL}* determined in the method (1) is 30 kHz, duration of one slot is 500 µs, which is shorter than duration of 1 ms of one slot in the case of subcarrier spacing being 15 kHz, and therefore there are more opportunities for scheduling uplink transmission and no too much frequent switching. This provides sufficient switching preparation time and an appropriate switching frequency for the terminal. In addition, *u_{UL}* determined by using the foregoing method (1) does not change with scheduling, and this can simplify scheduling implementation on a network side.

Optionally, the first information and the second information may be information respectively sent by the network device when the network device schedules, for two consecutive times, the terminal to perform uplink transmission. For example, the network device schedules, for a first time by using the first information, the terminal to perform uplink transmission, and the network device schedules, for a second time by using the second information, the terminal to perform uplink transmission.

Optionally, the first information and the second information may not be information sent by the network device when the network device schedules, for two consecutive times, the terminal to perform uplink transmission. For example, the network device schedules, for a first time by using the first information, the terminal to perform uplink transmission in the first time unit by using the M first bands, the network device schedules, for a second time, the terminal to perform uplink transmission by using the M first bands, and the network device schedules, for a third time by using the second information, the terminal to perform uplink transmission in the second time unit by using the K second bands.

Because the M first bands indicated by the first information are partially or completely different from the K second bands indicated by the second information, that the terminal performs uplink transmission based on the second information may be considered as first uplink switching. The M first bands may be considered as bands used before the first uplink switching, and the K second bands may be considered as bands used after the first uplink switching.

It may be understood that to implement functions in the foregoing embodiments, the base station and the terminal include corresponding hardware structures and/or software modules for performing various functions. A person skilled in the art should be easily aware that, in combination with the units and the method steps in the examples described in embodiments disclosed in this application, this application can be implemented by using hardware or a combination of hardware and computer software. Whether a function is performed by hardware or hardware driven by computer software depends on particular application scenarios and design constraint conditions of the technical solutions.

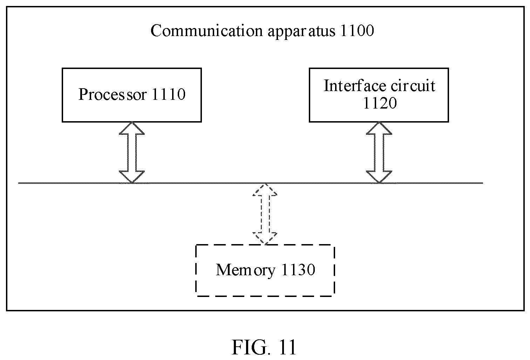

FIG. 10 and FIG. 11 are diagrams of structures of possible communication apparatuses according to embodiments of this application. These communication apparatuses may be configured to implement functions of the terminal or the network device in the foregoing method embodiments, and therefore can also implement beneficial effects of the foregoing method embodiments. In embodiments of this application, the communication apparatus may be one of the terminals 120a to 120j shown in FIG. 1, may be the network device 110a or 110b shown in FIG. 1, or may be a module (such as a chip) used in the terminal or the network device.

As shown in FIG. 10, the communication apparatus 1000 includes a receiving unit 1010 and a sending unit 1020. The communication apparatus 1000 is configured to implement functions of the terminal or the network device in the method embodiment shown in FIG. 8 or FIG. 9.

When the communication apparatus 1000 is configured to implement the functions of the terminal in the method embodiment shown in FIG. 8 or FIG. 9, the sending unit 1020 is configured to send capability information to the network device, and the receiving unit 1010 is configured to receive configuration information of a first band combination, first information, and second information from the network device. When the communication apparatus 1000 is configured to implement the functions of the terminal in the method embodiment shown in FIG. 8, the receiving unit 1010 is further configured to receive third information from the network device.

When the communication apparatus 1000 is configured to implement the functions of the network device in the method embodiment shown in FIG. 8, the receiving unit 1010 is configured to receive capability information from the terminal, and the sending unit 1020 sends configuration information of a first band combination, first information, and second information to the terminal. When the communication apparatus 1000 is configured to implement the functions of the network device in the method embodiment shown in FIG. 8, the sending unit 1020 is further configured to send third information to the terminal.

For more detailed descriptions of the receiving unit 1010, refer to related descriptions of the method embodiment shown in FIG. 8 or FIG. 9.

As shown in FIG. 11, a communication apparatus 1100 includes a processor 1110 and an interface circuit 1120. The processor 1110 and the interface circuit 1120 are coupled to each other. It may be understood that the interface circuit 1120 may be a transceiver or an input/output interface. Optionally, the communication apparatus 1100 may further include a memory 1130, configured to store instructions to be executed by the processor 1110, input data needed by the processor 1110 to run instructions, or data generated after the processor 1110 runs instructions.

When the communication apparatus is a chip used in a terminal, the chip in the terminal implements functions of the terminal in the foregoing method embodiments. The chip in the terminal receives information from another module (for example, a radio frequency module or an antenna) in the terminal, and the information is sent by a base station to the terminal. Alternatively, the chip in the terminal sends information to another module (for example, a radio frequency module or an antenna) in the terminal, and the information is sent by the terminal to a base station.

When the communication apparatus is a module used in a base station, the base station module implements functions of the base station in the foregoing method embodiments. Th module in the base station receives information from another module (for example, a radio frequency module or an antenna) in the base station, where the information is sent by a terminal to the base station; or the module in the base station sends information to another module (for example, a radio frequency module or an antenna) in the base station, where the information is sent by the base station to a terminal. The module in the base station herein may be a baseband chip in the base station, or may be a DU or another module. The DU herein may be a DU in an open radio access network (open radio access network, O-RAN) architecture.

It may be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general purpose processor may be a microprocessor or any regular processor or the like.

The method steps in embodiments of this application may be implemented in hardware, or may be implemented in software instructions that may be executed by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk drive, a removable hard disk drive, a CD-ROM, or any other form of storage medium well-known in the art. For example, a storage medium is coupled to a processor, so that the processor can read information from the storage medium and write information into the storage medium. The storage medium may alternatively be a component of the processor. The processor and the storage medium may be disposed in an ASIC. In addition, the ASIC may be located in a base station or a terminal. Certainly, the processor and the storage medium may exist in a base station or terminal as discrete components.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer programs or instructions. When the computer programs or instructions are loaded and executed on a computer, the procedures or functions in embodiments of this application are all or partially executed. The computer may be a general-purpose computer, a special-purpose computer, a computer network, a network device, user equipment, or another programmable apparatus. The computer program or instructions may be stored in a computer-readable storage medium, or may be transmitted from a computer-readable storage medium to another computer-readable storage medium. For example, the computer program or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk drive, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

In this application, at least one means one or more, and a plurality of means two or more. "And/or" describes an association relationship between associated objects, and represents that three relationships may exist. For example, A and/or B may represent the following cases: A exists alone, both A and B exist, and B exists alone, where A and B may be singular or plural. In the text descriptions of this application, the character "/" indicates an "or" relationship between the associated objects. In a formula in this application, the character "/" indicates a "division" relationship between the associated objects. "Including at least one of A, B, and C" may represent: including A; including B; including C; including A and B; including A and C; including B and C; and including A, B, and C.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

## Claims

1. An uplink transmission method, performed by a terminal or a module used in the terminal and comprising:
sending capability information to a network device, wherein the capability information indicates a first band combination and a first threshold corresponding to the first band combination, the first band combination comprises R bands, and R is an integer greater than or equal to 2;
receiving configuration information of the first band combination from the network device;
receiving first information from the network device, wherein the first information indicates the terminal to perform uplink transmission in a first time unit by using M first bands, the M first bands are bands in the R bands, and M is a positive integer less than or equal to R;
receiving second information from the network device, wherein the second information indicates the terminal to perform uplink transmission in a second time unit by using K second bands, the K second bands are bands in the R bands, K is a positive integer less than or equal to R, the K second bands are partially or completely different from the M first bands, and the second time unit is later than the first time unit; and
receiving third information from the network device, wherein the third information indicates the terminal to perform uplink transmission in a third time unit by using L third bands, the L third bands are bands in the R bands, L is a positive integer less than or equal to R, the L third bands are partially or completely different from the K second bands, and the third time unit is later than the second time unit, wherein
when a quantity of bands in a union set of the M first bands, the K second bands, and the L third bands is greater than S, and the first threshold is greater than 0, a time interval between a start moment of the third time unit and a start moment of the second time unit is greater than or equal to the first threshold, wherein S is an integer greater than or equal to 2.

2. The method according to claim 1, wherein the M first bands are bands used before first uplink switching, the K second bands are bands used after the first uplink switching and bands used before second uplink switching, and the L third bands are bands used after the second uplink switching.

3. The method according to claim 2, wherein the uplink transmission that is indicated by the second information and that is performed in the second time unit is uplink transmission after the first uplink switching, and the uplink transmission that is indicated by the third information and that is performed in the third time unit is uplink transmission after the second uplink switching.

4. The method according to any one of claims 1 to 3, wherein the second time unit and the third time unit are within two consecutive slots.

5. An uplink transmission method, performed by a network device or a module used in the network device and comprising:
receiving capability information from a terminal, wherein the capability information indicates a first band combination and a first threshold corresponding to the first band combination, the first band combination comprises R bands, and R is an integer greater than or equal to 2;
sending configuration information of the first band combination to the terminal;
sending first information to the terminal, wherein the first information indicates the terminal to perform uplink transmission in a first time unit by using M first bands, the M first bands are bands in the R bands, and M is a positive integer less than or equal to R;
sending second information to the terminal, wherein the second information indicates the terminal to perform uplink transmission in a second time unit by using K second bands, the K second bands are bands in the R bands, K is a positive integer less than or equal to R, the K second bands are partially or completely different from the M first bands, and the second time unit is later than the first time unit; and
sending third information to the terminal, wherein the third information indicates the terminal to perform uplink transmission in a third time unit by using L third bands, the L third bands are bands in the R bands, L is a positive integer less than or equal to R, the L third bands are partially or completely different from the K second bands, and the third time unit is later than the second time unit, wherein
when a quantity of bands in a union set of the M first bands, the K second bands, and the L third bands is greater than S, and the first threshold is greater than 0, a time interval between a start moment of the third time unit and a start moment of the second time unit is greater than or equal to the first threshold, wherein S is an integer greater than or equal to 2.

6. The method according to claim 5, wherein the M first bands are bands used before first uplink switching, the K second bands are bands used after the first uplink switching and bands used before second uplink switching, and the L third bands are bands used after the second uplink switching.

7. The method according to claim 6, wherein the uplink transmission that is indicated by the second information and that is performed in the second time unit is uplink transmission after the first uplink switching, and the uplink transmission that is indicated by the third information and that is performed in the third time unit is uplink transmission after the second uplink switching.

8. The method according to any one of claims 5 to 7, wherein the second time unit and the third time unit are within two consecutive slots.

9. A communication apparatus, comprising a processor and an interface circuit, wherein the interface circuit is configured to receive a signal from another communication apparatus and transmit the signal to the processor, or send a signal from the processor to another communication apparatus, and the processor is configured to implement the method according to any one of claims 1 to 8 by using a logic circuit or by executing code instructions.

10. A computer-readable storage medium, wherein the storage medium stores a computer program or instructions, and when the computer program or the instructions is/are executed by a communication apparatus, the method according to any one of claims 1 to 8 is implemented.
